# EUROPEAN PATENT SPECIFICATION

(11) **EP 1 018 406 B1**
(45) Date of publication and mention of the grant of the patent: **26.04.2006**
(21) Application number: 00200653.4
(22) Date of filing: 25.02.2000
(51) Int. Cl.: B25B 15/00, B25B 13/00, B21K 5/16, B25B 13/54

(54) **Method for manufacturing a multiple male spanner with different sizes for operating screws, bolts and the like**
Verfahren zur Herstellung eines mehrfacheren Imbusschlüssels mit verschiedenen Abmessungen zum Betätigen von Schrauben, Muttern und dergleichen
Procédé de fabrication d'une clé mâle multiple avec différentes dimensions pour serrer des vis, écrous ou semblables

(30) Priority: 02.11.1999 IT MI992284
(43) Date of publication of application: 12.07.2000
(73) Proprietor: F.lli Mauri S.r.l., 23852 Garlate (Lecco) (IT)
(72) Inventor: MAURI, Gaetano, 23900 Lecco (IT)
(74) Representative: Raimondi, Margherita

(56) References cited:
- CH-A- 258 928
- FR-A- 1 128 676
- GB-A- 2 101 026
- US-A- 1 595 588

## Description

The present invention relates to a method for the manufacture of a multiple spanner for operating screws, bolts and the like having an inset recess, according to the preamble of claim 1, which is composed of a bar forming the shank of the spanner and having opposite ends shaped in the form of keys of different sizes.

In the technical sector, hexagonal male spanners suitable for operating screws, bolts and the like having a corresponding hexagon inset in their heads are known; similarly spanners which, instead of a hexagonal, have a star-shaped form in accordance with the various known configurations are known.

A specific example of such spanners consists of Z-shaped spanners which are used for example as an accessory supplied in packaging for furniture which is bought disassembled and must be assembled by the user at the intended location.

It is also known that these spanners all have ends which have the same size and that this size results in an area of the cross-section of the spanner which is always correspondingly smaller than the cross-sectional area of the initial wire from which the said spanner is formed. The prior art is disclosed into CH-A-258 928 and GB-A-2 101 026 which show male spannets. FR-A-1 128 676 discloses the manufacture of a female spanner by upsetting and forming the ends of a bar cut to size.

The spanners known in the art therefore do not provide the user with two sizes, i.e. one at each end, therefore resulting in the need to have always one spanner for each screw size and in the need to change the spanners during assembly depending on the different sizes of screws to be screwed/unscrewed with obvious disadvantages, loss of time and increased costs.

The technical problem which is posed, therefore, is that of providing spanners for operating screws, bolts and the like, which allow two different sizes of screws or the like to be operated without the need to change the said spanner.

Within the context of this problem a further requirement is the need for a spanner which has at least one of its ends which is larger than the diameter of the wire from which the spanner is made so as to be able to obtain substantial savings in material once the product has been finished.

Correspondingly an additional problem is that of providing an associated method for manufacturing said spanners.

These technical problems are solved according to the present invention by a method according to a claim 1.

Further details may be obtained from the following description of an example of embodiment of the invention provided with reference to the accompanying drawings in which:
- Figure 1 shows a flow diagram of the method according to the invention;
- Figure 2 shows the deformation of the wire corresponding to the various steps of the method according to Fig. 1;
- Figure 3 shows the side view of a first example of embodiment of a Z-shaped spanner;
- Figures 4a,4b show the opposite front views of the spanner according to Figure 4;
- Figures 5a-5d show a further example of embodiment of spanner manufactured according to the invention;
- Figures 6a-6d show a third example of embodiment of the spanner manufactured according to the invention.

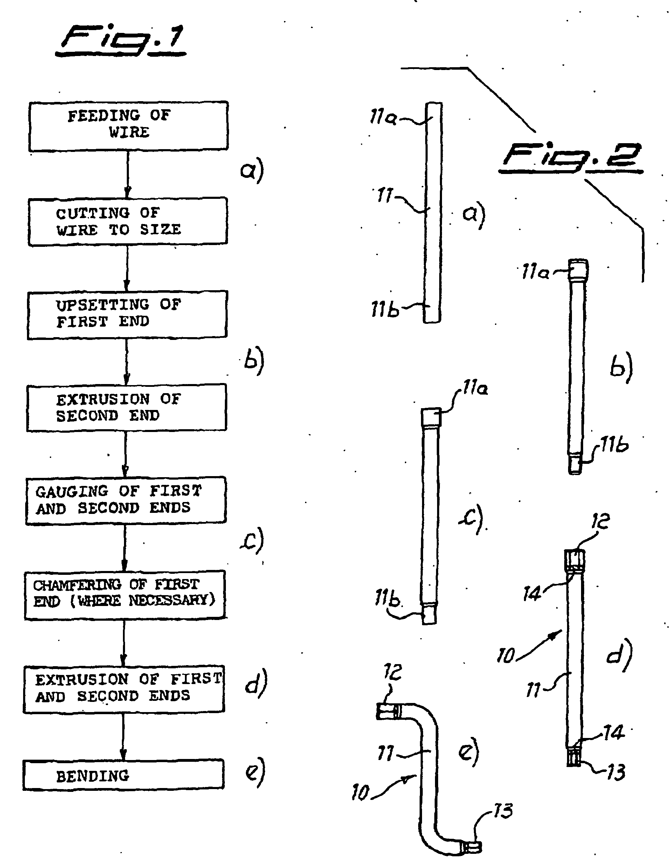

As illustrated in Figs. 1 and 2 the method according to the invention envisages the following steps:
a) feeding and cutting to size the round bar 11 from which the spanner 10 is to be formed;
   Assuming a totally automatic cycle, this feeding operation may be performed from reels of round bar material unwound continuously and fed to a machine, in the first station of which said cutting-to-size operation is performed;
   It is envisaged, however, that the round bar may be continuously replaced by discontinuous sections of bars of suitable shape, size and cross-section;
b1) upsetting of the end 11a at which the hexagon 12 with a larger side is to be formed;
b2) extrusion of the end 11b at which the hexagon 13 with a smaller side is to be formed;
   Although described in sequence, it is envisaged that in an automatic machine cycle said steps b1) and b2) may be performed simultaneously;
c1) gauging of both the ends 11a,11b of the round bar 11;
c2) the formation, if necessary, of the end chamfer 14 on both hexagons;
d) final extrusion of both the ends 11a and 11b so as to obtain the hexagon with a larger side 12 and smaller side 13, respectively;
e) eventual bending the round bar so as to provide the Z-shaped form.

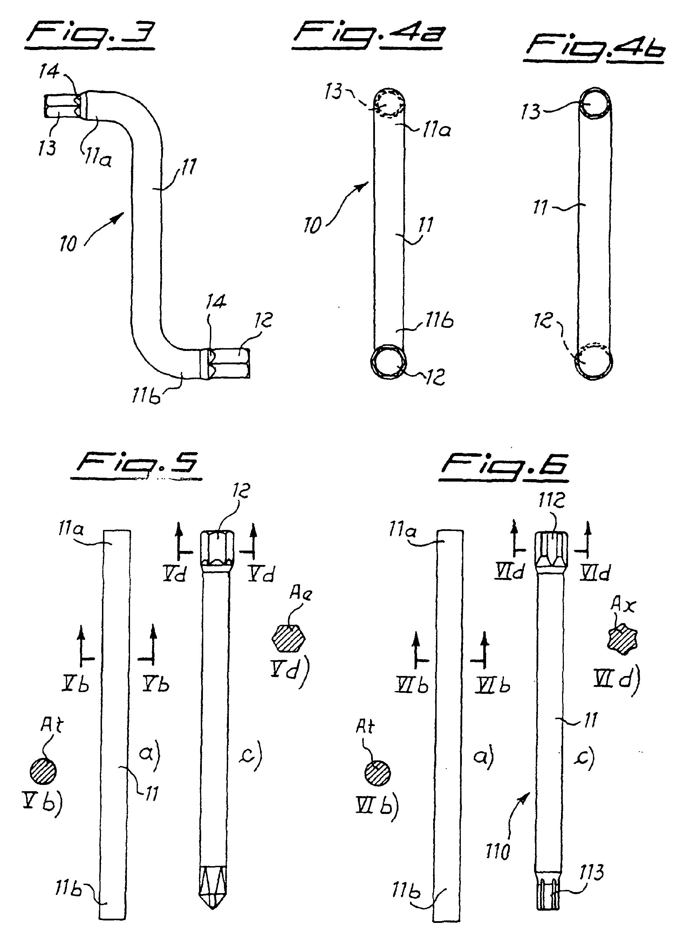

According to preferred modes of implementation of the method it is envisaged that the upsetting operation according to step b1) and the subsequent gauging operation according to step c1) cause a compression, in the longitudinal direction, of the end 11a of the round bar which is able to produce an increase in the area of the corresponding cross-section compared to the area Aₜ of the cross-section of the round bar 11 so that the ratio Aₑ/Aₜ between the area Aₑ of the final hexagon 12 and the said area A, of the round bar is between 1.05 and 1.20 and preferably between 1.14 and 1.17 in accordance with the values shown in the table below corresponding to the different sizes which the hexagons of the key according to Fig. 3 may have:

| 13 | 12 | Aₜ | Aₑ | Aₑ/Aₜ |
|---|---|---|---|---|
| 2.5 | 3 | 6.61 | 7.79 | 1.17 |
| 3 | 4 | 11.95 | 13.86 | 1.15 |
| 4 | 5 | 18.86 | 21.65 | 1.14 |
| 5 | 6 | 27.34 | 31.18 | 1.14 |

By means of the method described above it will also be possible to provide spanners 110 having cross-shaped or so-called "Torx" ends, it being sufficient to have a suitable and corresponding extrusion die for the step d) of the said method.

In this case the ratio between the area Aₓ of the cross-section of the Torx end 112 and the cross-sectional area of the initial round bar 11 produce a ratio of between 1 and 1.1 and preferably between 1.01 and 1.07 in accordance with the values shown in the table below corresponding to the different sizes of the spanners according to Fig. 6.

| 113 | 112 | Aₜ | Aₓ | Aₓ/Aₜ |
|---|---|---|---|---|
| T-10 | T-15 | 5.94 | 6.4 | 1.07 |
| T-15 | T-25 | 11.04 | 11.61 | 1.05 |
| T-25 | T-30 | 17.35 | 17.88 | 1.03 |
| T-30 | T-40 | 25.52 | 25.95 | 1.01 |

The result is that it is possible to provide spanners which have ends with different sizes and, although it is possible to provide any type of combination of sizes, the method according to the invention and the spanners produced thereby have proved to be particularly advantageous when at least one of the two ends must be greater than the other one and in particular with a cross-sectional area greater than the cross-sectional area of the initial round bar; in this case, in fact, a saving in material is obtained, which can be calculated as being in the region of about 25% with respect to spanners where the area of the initial bar substantially corresponds to the area of the larger size hexagon.

Although described in relation to a Z-shape, the spanner according to the invention may also be bent in different shapes such as, for example, an L-shape or may be kept straight and if necessary provided with intermediate projections for operation by means of handles and the like.

## Claims

1. Method for the manufacture of a multiple male spanner (10;110) with different sizes for operating screws, bolts and the like having an inset recess, **characterized in that** it comprises the following steps:
a) cutting to size a bar (11) from which the spanner (10;110) is to be obtained;
b1) upsetting the end (11a) of the bar (11) where the larger size key (12) is to be formed;
b2) extruding the opposite end (11b) of the bar where the key (13) with a smaller side is to be formed;
c1) gauging both the ends (11a, 11b) of the bar (11);
d) final extrusion of both the ends (11a,11b) so as to obtain the two keys (12,13).

2. Method according to Claim 1, **characterized in that** it comprises the further step of:
e) bending the bar so as to provide it with a Z shape;

3. Method according to Claim 1, **characterized in that** it comprises the additional step of:
c2) forming the end chamfer (14);
carried out after the gauging step b1).

4. Method according to Claim 1, **characterized in that** said bar is a round bar.

5. Method according to Claim 1, **characterized in that** said said larger size end has a hexagon-shaped cross-section (Aₑ).

6. Method according to Claim 1, **characterized in that** said larger size end has a cross-shaped or Torx-type cross-section (Aₓ).

## Patentansprüche

1. Verfahren zur Herstellung eines mehrfachen, männlichen Schraubenschlüssels (10;110) mit unterschiedlichen Grössen zum Antreiben von Schrauben, Bolzen und dergleichen, welche eine Vertiefung für einen Einsatz haben,
**dadurch gekennzeichnet, dass** es die folgenden Schritte umfasst:
a) Zuschneiden eines Stabes (11), aus welchem der Schraubenschlüssel hergestellt werden soll;
b1) Stauchen des Endes (11a) des Stabes (11), wo der grössere Schlüssel (12) geformt wird;
b2) Extrudieren des entgegengesetzten Endes (11b) des Stabes, wo der Schlüssel (13) mit einer schmaleren Seite geformt wird;
c1) Kalibrieren beider Enden (11a, 11b) des Stabes (11);
d) abschliessendes Extrudieren der beiden Enden (11a, 11b) derart, dass die beiden Schlüssel (12, 13) erhalten werden.

2. Verfahren nach Anspruch 1, **dadurch gekennzeichnet, dass** es zusätzlich den folgenden Schritt umfasst:
e) Biegen des Stabes, um ihm eine Z-Form zu geben.

3. Verfahren nach Anspruch 1, **dadurch gekennzeichnet, dass** es den folgenden zusätzlichen Schritt:
c2) Formen der Endabschrägung (14);
ausgeführt nach dem Kalibrierungsschritt b1).

4. Verfahren nach Anspruch 1, **dadurch gekennzeichnet, dass** der genannte Stab ein runder Stab ist.

5. Verfahren nach Anspruch 1, **dadurch gekennzeichnet, dass** das genannte grössere Ende einen Sechseck-förmigen Querschnitt (Aₑ) aufweist.

6. Verfahren nach Anspruch 1, **dadurch gekennzeichnet, dass** das genannte grössere Ende einen Kreuz-förmigen oder Torx-Typ Querschnitt (Aₓ) aufweist.

## Revendications

1. Procédé de fabrication d'une clé à vis mâle multiple (10 ; 110) de dimensions différentes pour actionner des vis, des boulons et analogues comportant un évidement d'insertion, **caractérisé en ce qu'**il comprend les étapes suivantes :
a) couper à la dimension une barre (11) à partir de laquelle la clé à vis (10 ; 110) doit être obtenue ;
b1) refouler l'extrémité (11a) de la barre (11) où la clé de dimension supérieure (12) doit être formée ;
b2) extruder l'extrémité opposée (11b) de la barre où la clé (13) dotée d'un côté plus petit doit être formée ;
c1) calibrer les deux extrémités (11a, 11b) de la barre (11) ;
d) extruder enfin les deux extrémités (11a, 11b) de façon à obtenir les deux clés (12, 13).

2. Procédé selon la revendication 1, **caractérisé en ce qu'**il comprend l'étape supplémentaire consistant à :
e) courber la barre de façon à lui fournir la forme d'un Z.

3. Procédé selon la revendication 1, **caractérisé en ce qu'**il comporte l'étape additionnelle consistant à :
c2) former le chanfrein d'extrémité (14) ;
réalisé après l'étape de calibrage c1).

4. Procédé selon la revendication 1, **caractérisé en ce que** ladite barre est une barre ronde.

5. Procédé selon la revendication 1, **caractérisé en ce que** ladite extrémité de plus grande dimension présente une section transversale configurée de façon hexagonale (Ae).

6. Procédé selon la revendication 1, **caractérisé en ce que** ladite extrémité de plus grande dimension présente une section transversale configurée en croix ou de type à six lobes internes (Torx) (Aₓ).
